# FASCICULE DE BREVET EUROPEEN

(11) **EP 4 279 848 B1**
(45) Date de publication et mention de la délivrance du brevet: **13.11.2024**
(21) Numéro de dépôt: 23163363.7
(22) Date de dépôt: 22.03.2023
(51) Int. Cl.: F25J 3/02, F25J 1/00, F25J 1/02

(54) **PROCÉDÉ ET APPAREIL DE REFROIDISSEMENT D'UN DÉBIT RICHE EN CO2**
VERFAHREN UND VORRICHTUNG ZUR KÜHLUNG EINES CO2-REICHEN STROMS
METHOD AND APPARATUS FOR COOLING A CO2-RICH FLOW

(30) Priorité: 20.05.2022 FR 2204833
(43) Date de publication de la demande: 22.11.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: RAVENTOS, Martin, 94503 Champigny sur Marne (FR); DUBETTIER-GRENIER, Richard, 94503 Champigny sur Marne (FR); LECLERC, Mathieu, 94503 Champigny sur Marne (FR); MOREL, Thomas, 94503 Champigny sur Marne (FR)
(74) Mandataire: Air Liquide

(56) Documents cités:
- CN-A- 105 545 390
- FR-A1- 3 099 234
- JP-A- H04 121 573
- JP-A- H08 311 438
- JP-A- S5 520 206

## Description

La présente invention est relative à un procédé et à un appareil de refroidissement d'un débit riche en CO2. Au moins une partie des frigories requises pour le refroidissement, voire la liquéfaction, sont fournies par le réchauffement d'un fluide riche en méthane, par exemple la vaporisation d'un liquide riche en méthane, par exemple contenant au moins 80% mol de méthane ou la pseudo-vaporisation d'un fluide riche en méthane en phase dense. Un exemple d'un tel liquide est le gaz naturel liquéfié (LNG). Le transfert de frigories est réalisé en utilisant un fluide intermédiaire riche en éthane ou éthylène pour transférer les frigories du gaz liquéfié, par exemple du gaz naturel liquéfié vers la liquéfaction du débit riche en CO2.

Un débit riche en CO2 comprend au moins 70% mol de dioxyde de carbone, de préférence au moins 90% mol de dioxyde de carbone, voire au moins 95% de dioxyde de carbone.

La liquéfaction d'un débit de riche en dioxyde de carbone consomme généralement de l'électricité pour fournir la réfrigération requise. De gaz naturel liquéfié est souvent vaporisé contre de l'eau de mer ou un autre calorigène. Les deux systèmes ont des besoins complémentaires, car la vaporisation de gaz naturel liquéfié requiert de la chaleur et la liquéfaction de dioxyde de carbone nécessite d'avoir une source de froid. Il est donc intéressant d'investiguer la possibilité d'intégrer les deux systèmes.

En principe, puisque la quantité disponible de LNG comme frigorigène est « illimitée », il devrait être possible de condenser le CO2 à une pression assez basse afin de minimiser l'énergie de liquéfaction, comparée à celle requise par une liquéfaction où le CO2 est comprimé à une pression supercritique, densifié et puis détendu vers une colonne d'épuisement. Par contre, le choix d'une pression de liquéfaction très basse peut limiter le rendement en CO2 du procédé de liquéfaction puisque le profil des températures dans la colonne d'épuisement est limité.

L'usage d'un échange de chaleur direct entre le LNG (typiquement disponible à entre -160°C et -145°C) comme frigorigène et le CO2 ne peut être envisagé à cause du risque du gel de CO2. Ceci veut dire qu'un fluide intermédiaire doit être utilisé pour transport les frigories du LNG vers le CO2. Ceci peut se réaliser de deux manières :
a) Transport des frigories du LNG uniquement sous forme de chaleur sensible du fluide intermédiaire (dans ce cas, celui-ci peut être de l'azote gazeux, un liquide HFO).
b) Transport des frigories du LNG à travers la chaleur sensible et la chaleur latente du fluide intermédiaire.

Le désavantage de l'option a) est l'incompatibilité entre les profils enthalpie-températures du CO2 qui se condense et le fluide intermédiaire dans l'échangeur de chaleur (la plupart de la chaleur est produit par le CO2 à température constante alors que la température du fluide intermédiaire augmente à une vitesse constante, selon son débit et sa chaleur spécifique). Cet obstacle peut être évité, par exemple, en augmentant le débit du fluide intermédiaire et/ou en augmentant la pression du CO2 pour s'approcher de la pression critique, voire la dépasser. Les deux solutions nécessitent d'augmenter l'énergie et donc ces solutions sont moins attractives.

Il est connu de FR2869404, JP2004069215 et JPH04148182 d'utiliser le froid d'un débit de LNG qui se vaporise pour faire condenser du dioxyde de carbone, en utilisant un cycle de réfrigérant, le réfrigérant étant l'éthane.

JPH04-131688 décrit un cycle fermé de fluide intermédiaire qui transfère du froid d'un débit de LNG vers un débit de CO2 à liquéfier, le cycle comprenant une pompe pour pressuriser le fluide intermédiaire. Le fluide utilisé est du Freon ^{®}.

FR2869404 décrit un cycle fermé de fluide intermédiaire qui transfère du froid d'un débit de LNG vers un débit de CO2 à liquéfier, le fluide intermédiaire étant de l'éthane qui se vaporise contre le CO2 et se liquéfie contre le LNG. La pression du fluide intermédiaire est constante.

Puisque la plupart des frigories sont disponibles à des températures plus basses que celles de la liquéfaction de CO2, il devrait être possible, au moins d'un point de vue de thermodynamique, d'intégrer les procédés avec un coût énergétique nul, voire même avec génération d'énergie. Dans un contexte pratique, une forme d'intégration est recherchée n'ayant qu'une consommation limitée d'énergie, (par exemple en utilisant seulement des pompes, sans compression non entraînée par une turbine) et qui est compatible avec l'usage d'échangeurs compact à multi-fluides (par exemple un échangeur à plaques et à ailettes en aluminium brasé). Idéalement le procédé doit permettre à l'LNG d'être chauffé jusqu'à la température ambiante, afin de l'injecter dans un réseau de gaz naturel ou de le fournir à des clients sans avoir à le chauffer avec un moyen de chauffage séparé.

La présente invention vise à améliorer les procédés connus en réduisant le risque de geler le dioxyde de carbone dans le procédé de refroidissement, voire liquéfaction de dioxyde de carbone.

Elle utilise un fluide intermédiaire pour récupérer le froid du LNG composé principalement d'éthane et/ou d'éthylène, pouvant comprendre également du méthane. Ce fluide sera désigné comme fluide C2. Ce fluide contient de préférence au moins 90% mol d'éthane ou d'éthylène.

Ce fluide intermédiaire permet, de préférence, de récupérer du froid jusqu'à des températures inférieures à -60°C.

Un échangeur de chaleur dédié (appelé "échangeur LNG") est utilisé pour échanger de la chaleur entre le fluide intermédiaire et le liquide riche en méthane, par exemple du gaz naturel liquéfié LNG sous forme liquide ou en phase dense. Le LNG est réchauffé ou vaporisé (selon sa pression) contre le fluide C2 qui se condense et est refroidi à une température inférieure à -50°C dans un seul passe ou dans de multiples passes en parallèle opérant à des pressions différentes (Pc1, Pc2, PcN, où N est typiquement entre 2 et 4), afin de limiter les écarts de températures entre fluides de l'échangeur. L'échangeur LNG sera typiquement un échangeur à plaques et à ailettes en aluminium brasé ou en acier inoxydable, un échangeur à calandre et à tubes ou un échangeur à circuit imprimé.

Si un échangeur à plusieurs fluides est utilisé, les débits de fluide C2 sont de préférence sousrefroidis jusqu'à une température entre 2-10 K au-dessus de la température d'entrée du LNG dans l'échangeur. Au bout froid du même échangeur, tous les fluides C2 sousrefroidis sont mélangés à une pression P1, éventuellement à l'aide d'au moins une pompe et réchauffés dans un autre passage du même échangeur jusqu'à une température entre 2 et 5K en dessous de la température de bulle des débits mélangés à la pression P1. Le sousrefroidissement du fluide C2 autour de -60°C est uniquement un moyen de limiter les écarts de températures dans l'échangeur.

Le débit résultant de fluide C2 à la pression P1 est ensuite réchauffé et vaporisé contre que le CO2 qui se condense, le CO2 étant idéalement à une seule pression entre 10-16 bara dans un autre échangeur de chaleur à plusieurs fluides, le fluide C2 traversant cet échangeur soit à une seule pression, soit en parallèle à deux pressions P1 et P2 < P1. Si deux pressions de vaporisation sont utilisées, P2 devrait typiquement correspondre à la pression de bulle du fluide C2 à environ -55°C. Dans ce cas, le débit du fluide C2 vaporisé à P1 serait bien plus petit (par exemple entre 25 et 35 fois plus petit) que le débit de fluide C2 vaporisé à P2, celui-ci fournissant la plupart de la réfrigération associée à la condensation de CO2 et celui-là fournissant la plupart de réfrigération associée avec le sousrefroidissement de CO2 et la production de reflux pour la colonne de distillation de CO2.

Le fluide C2 à P1 vaporisé (ou les fluides vaporisés à P1 et à P2) obtenu au bout chaud de l'échangeur de chaleur où se condense le CO2 doit être prévu pour produire les débits requis aux pressions de condensation choisies Pc1, Pc2, PcN pour l'échangeur de réchauffage de LNG. On doit, à partir de deux courants disponibles à deux pressions différentes, former N courants, à des valeurs de pression Pc1, Pc2, PcN et avec des débits spécifiés. Ceci suppose de comprimer au moins un courant et/ou de détendre au moins un courant. Il est important de valoriser la pression des courants originaux (c'est-à-dire, en minimisant la compression, particulièrement si elle ne peut pas être entraînée par la détente d'un autre courant dans une turbine).

Idéalement seule une des pressions de condensation Pc1, Pc2, PcN est supérieure à P1. Dans ce but, une partie du fluide C2 gazeux à P1 est comprimée par un compresseur centrifuge jusqu'à la plus élevée des pressions de condensation. Le fluide C2 aux autres pressions de condensation est obtenu en détendant le restant de fluide C2 dans au moins une vanne JT et une turbine centrifuge. En choisissant les pressions et débits adaptés, il est possible que la turbine entraîne le compresseur, de sorte que la seule consommation d'énergie est celle de la pompe.

Le nombre de débits de fluide C2 à pression différente passant dans l'échangeur de réchauffage de LNG est choisi en fonction de la composition du fluide C2 et du type d'échangeur utilisés. En termes généraux, plus le nombre de débits est élevé, plus les différences de température entre les fluides sont petites, de sorte que le réchauffage puisse par exemple être réalisé dans un échangeur à plaques et à ailettes en aluminium brasé.

CN105545390A et JP H04 121573A décrivent un procédé et un appareil conformément aux préambules des revendications 1 et 21 respectivement.

Un but de la présente invention est de limiter les écarts de température au bout froid d'un des échangeurs, afin d'augmenter l'efficacité du procédé.

Selon un objet de l'invention, il est prévu un procédé de récupération de frigories d'un fluide riche en méthane, par exemple du gaz naturel liquéfié, pour le refroidissement et éventuellement la liquéfaction, voire la séparation d'un débit riche en dioxyde de carbone dans lequel:
i.on refroidit et éventuellement on condense au moins partiellement le débit riche en dioxyde de carbone dans un premier échangeur de chaleur à une pression supérieure à 5 bar abs, voire supérieure à 13 bar abs ;
ii.on fournit du froid pour l'étape i) par la vaporisation d'un fluide intermédiaire contenant au moins 80% mol d'éthane ou d'éthylène à au moins un niveau de pression, de préférence à un seul niveau de pression ;
iii.on condense au moins une partie du fluide intermédiaire vaporisé dans l'étape ii) dans un deuxième échangeur de chaleur à au moins une pression en au moins un flux, de préférence à une seule pression en un seul flux, par échange de chaleur avec le fluide riche en méthane pour former au moins un flux de fluide intermédiaire condensé ;
iv.on pressurise l'au moins un flux de fluide intermédiaire condensé au moyen d'une pompe caractérisé en ce que
v.on réchauffe l'au moins un flux pressurisé par la pompe dans le deuxième échangeur de chaleur jusqu'à une température intermédiaire de celui-ci, la température intermédiaire étant une température supérieure à celle d'un bout froid du deuxième échangeur de chaleur et inférieure à celle du bout chaud du deuxième échangeur de chaleur et on l'envoie au premier échangeur de chaleur pour se vaporiser selon l'étape ii).

Selon d'autres aspects facultatifs de l'invention :
- le fluide riche en méthane est un gaz ou un liquide
- une partie du fluide intermédiaire se condense à une première pression dans le deuxième échangeur et au moins une autre partie du fluide intermédiaire se condense à au moins une pression inférieure à la première pression dans le deuxième échangeur.
- on pressurise jusqu'à la première pression dans la pompe l'au moins une autre partie du fluide intermédiaire condense à l'au moins une pression inférieure à la première pression.
- l'au moins une partie du fluide intermédiaire réchauffée selon l'étape iv) comprend la partie du fluide intermédiaire condensé à la première pression et au moins une partie du fluide intermédiaire pressurisée par la pompe.
- au moins une pression de condensation du fluide intermédiaire dans le deuxième échangeur de chaleur est plus élevée, de préférence d'au moins 2 bars, que la pression de vaporisation du fluide intermédiaire dans le premier échangeur de chaleur ou, quand il y a plusieurs pressions de vaporisation de fluides intermédiaires, que la plus haute des pressions de vaporisation du fluide intermédiaire dans le premier échangeur de chaleur.
- la compression de la partie du fluide intermédiaire vaporisé qui est condense à une pression plus haute que la pression de vaporisation du fluide intermédiaire dans le premier échangeur de chaleur ou, quand il y a plusieurs pressions de vaporisation de fluides intermédiaires, que la plus haute des pressions de vaporisation est effectuée par un compresseur entraîné par une turbine qui détend une autre partie du fluide intermédiaire vaporisé.
- le cycle de fluide intermédiaire ne comprend pas de compresseur ou ne comprend pas de compresseur entraîné par un moteur.
- les pressions de vaporisation du fluide intermédiaire dans le premier échangeur de chaleur sont entre 3 bara and 25 bara, de préférence entre 4 bara et 21 bara, et/ou les pressions de condensation du fluide intermédiaire dans le deuxième échangeur de chaleur sont entre 1.05 bara and 50 bara, de préférence entre 1.3 bara and 45 bara.
- le fluide intermédiaire contient plus que 85%vol d'éthane and de préférence plus que 90%vol d'éthane.
- le fluide intermédiaire contient plus que 85%vol d'éthylène and de préférence plus que 90%vol d'éthylène
- le rapport entre l'au moins un débit molaire de fluide intermédiaire et le débit molaire du débit riche en dioxyde de carbone envoyés au premier échanger de chaleur est entre 1.0 et 1.5, de préférence entre 1 et 1.4.
- le rapport entre l'au moins un débit molaire de fluide intermédiaire et le débit molaire de gaz riche en méthane, par exemple du LNG, envoyés au deuxième échanger de chaleur est entre 0.7 et 1.0, de préférence 0.75 et 0.95.
- le gaz riche en CO2 liquéfié est produit à une température égale ou inférieure à - 40°C and de préférence égale ou inférieure à - 50°C.
- le débit riche en dioxyde de carbone à l'entrée du premier échangeur contient plus que 30% vol de CO2, de préférence plus que 35% vol CO2.
- le débit riche en dioxyde de carbone à l'entrée du premier échangeur contient plus que 90% vol de CO2, de préférence plus que 95% vol CO2.
- au moins une partie du gaz riche en méthane chauffé ou vaporisé dans le deuxième échangeur de chaleur est envoyée comme carburant ou comme réactant à une unité de reformage de méthane à la vapeur, une unité de reformage auto thermique ou une unité d'oxydation partielle et le débit riche en CO2 est produit par cette unité ou dérivé d'un produit de cette unité.
- un liquide riche en CO2 produit par la liquéfaction ou la séparation par distillation ou condensation partielle du débit riche en dioxyde de carbone est sousrefroidi dans le premier échangeur par échange de chaleur avec l'au moins une partie du fluide intermédiaire réchauffé dans le deuxième échangeur de chaleur jusqu'à une température intermédiaire.
- le débit riche en CO2 se sépare dans au moins une colonne de distillation
- une partie d'un liquide riche en CO2 pris dans la cuve de la colonne de distillation est vaporisée dans le premier échangeur de chaleur à une température supérieure à la température intermédiaire et renvoyée en cuve de la colonne de distillation.
- une partie du fluide intermédiaire réchauffé dans le premier échangeur est détendue dans une turbine pour générer de l'électricité.

Selon un autre objet de l'invention, il est prévu un appareil de récupération de frigories d'un fluide riche en méthane, par exemple du gaz naturel liquéfié, pour le refroidissement et éventuellement la liquéfaction, voire la séparation d'un débit riche en dioxyde de carbone comprenant un premier échangeur de chaleur, un deuxième échangeur de chaleur , des moyens pour envoyer se refroidir et éventuellement se condenser au moins partiellement le débit riche en dioxyde de carbone dans un premier échangeur de chaleur, un cycle fermé de fluide intermédiaire comprenant des moyens pour envoyer le fluide intermédiaire contenant au moins 80% mol d'éthane ou d'éthylène se vaporiser dans le premier échangeur à au moins un niveau de pression, de préférence à un seul niveau de pression, des moyens pour envoyer le fluide vaporisé se condenser dans le deuxième échangeur de chaleur à au moins une pression en au moins un flux, de préférence à une seule pression en un seul flux, par échange de chaleur avec le fluide riche en méthane pour former au moins un flux de fluide intermédiaire condensé, une pompe pour pressuriser l'au moins un flux de fluide intermédiaire condensé, caractérisé en ce qu'il comprend des moyens pour envoyer le flux de la pompe au deuxième échangeur de chaleur pour se réchauffer jusqu'à une température intermédiaire de celui-ci, la température intermédiaire étant une température supérieure à celle d'un bout froid du deuxième échangeur de chaleur et inférieure à celle du bout chaud du deuxième échangeur de chaleur et des moyens pour extraire le flux réchauffé du deuxième échangeur de chaleur à la température intermédiaire étant reliés aux moyens pour envoyer le fluide intermédiaire contenant au moins 80% mol d'éthane ou d'éthylène se vaporiser dans le premier échangeur.

L'invention sera décrite de manière plus détaillée en se référant aux figures où:
[FIG.1] représente un procédé de condensation de CO2 par échange de chaleur avec un liquide riche en méthane, par exemple du LNG, utilisant un cycle dont le fluide est 100% éthane
[FIG.2] représente un procédé de condensation de CO2 par échange de chaleur avec un liquide riche en méthane, par exemple du LNG, utilisant un cycle dont le fluide est 100% éthylène
[FIG.3] représente un procédé de condensation de CO2 par échange de chaleur avec un liquide riche en méthane, par exemple du LNG, utilisant un cycle dont le fluide est 93.5%mol éthane et 6.5%mol méthane.
[FIG.4] représente un procédé de condensation de CO2 par échange de chaleur avec un liquide riche en méthane, par exemple du LNG, utilisant un cycle dont le fluide est de l'éthylène avec 6 à 7% de méthane.

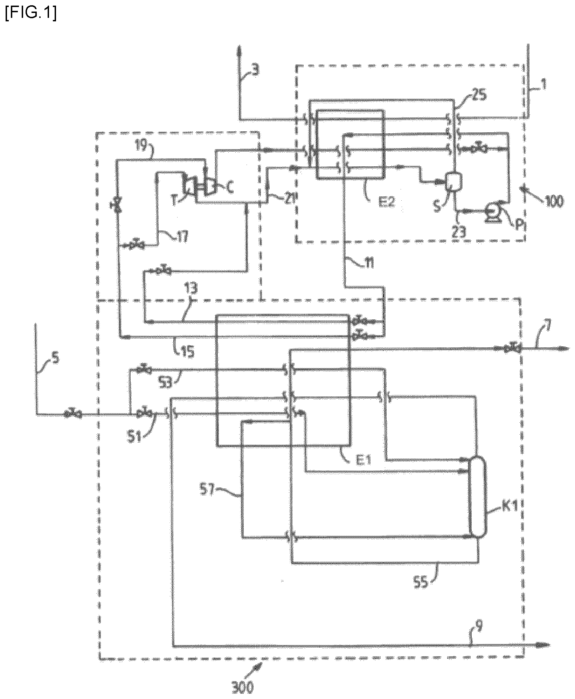

[FIG.1] représente un procédé de condensation de CO2 par échange de chaleur avec un liquide riche en méthane, par exemple du LNG, utilisant un cycle dont le fluide est 100% éthane avec deux débits de fluides se condensant dans l'échangeur à deux pressions de condensation différentes. Un débit de gaz naturel liquéfié (LNG) 1 est envoyé au bout froid d'un échangeur de chaleur E2 qui peut être un échangeur à plaques et à ailettes ou un échangeur à circuit imprimé. Le gaz naturel liquéfié se vaporise et se réchauffe dans l'échangeur E2 pour produire du gaz naturel 3 sortant du bout chaud de préférence à une température au-dessus de 0°C, par exemple la température ambiante. Le fluide 1 peut être un gaz ou un liquide.

Dans l'échangeur de chaleur E2, deux débits C2, ici d'éthane, 19, 21 sont refroidis, le débit 21 étant à plus basse pression que le débit 19. Le débit 21 traverse l'échangeur de chaleur E1 du bout chaud au bout froid en se condensant complètement. Le débit condensé est envoyé dans un ballon S. Le liquide 23 du ballon S est pressurisé par une pompe P et mélangé avec le débit 19 qui s'est condensé et qui est détendu dans une vanne. Le débit formé 11 est désousrefroidi donc chauffé dans l'échangeur de chaleur E1 jusqu'à une température intermédiaire de celui-ci, c'est-à-dire une température entre celle du bout froid et du bout chaud de l'échangeur.

Le débit 11 est envoyé au liquéfacteur de CO2 soit dans une conduite isolée thermiquement soit en parcourant une boîte froide isolée thermiquement commune à l'échangeur E2 et au liquéfacteur de CO2. Le débit 11 est divisé en deux et les deux parties 13, 15 sont détendues dans des vannes respectives et réchauffées dans un échangeur de chaleur E1 en passant du bout froid vers le bout chaud. Après réchauffage, le débit 15 est divisé en deux pour former les débits 19, 17. Le débit 19 est comprimé dans un compresseur C, refroidi dans un refroidisseur (non illustré) et envoyé à la pression de sortie de celui-ci à l'échangeur E2. Le débit 17 est détendu à partir de la pression P1 dans une turbine T qui entraîne le compresseur C et est mélangé avec le débit 13 pour former le débit 21 qui entre dans l'échangeur E2.

Le débit 5 riche en dioxyde de carbone à entre 10-16 bara est divisé en deux parties 51, 53 Le débit 53 parcourt entièrement l'échangeur E1 et est envoyé comme reflux en tête d'une colonne de distillation K1, s'étant condensé dans l'échangeur E1. L'autre partie 51 se refroidit dans l'échangeur E1 à la même pression que la partie 53 mais sort de l'échangeur E1 à une température intermédiaire entre celles du bout chaud et du bout froid. La partie 51 est ensuite envoyée à la colonne K1.

Le rebouillage de la colonne K1 est fourni en prenant une partie 57 du liquide de cuve 55 de la colonne K1 enrichi en dioxyde de carbone. Le liquide de cuve 55 est envoyée à un niveau intermédiaire de l'échangeur E1 plus chaude que le point de sortie du débit 51. La partie 57 est vaporisée et réchauffée et renvoyée en cuve de la colonne K1 comme gaz. Le reste 7 du liquide 55 est sousrefroidi dans l'échangeur de chaleur E1 par échange de chaleur avec le fluide intermédiaire 11 et forme le dioxyde de carbone liquide qui est le produit du procédé. Le gaz de tête 9 de la colonne K1 se réchauffe dans l'échangeur E1 du bout froid jusqu'au bout chaud et sort du système. Ce gaz 9 est enrichi en impuretés légères telle que l'azote, l'hydrogène, le monoxyde de carbone...

La pression de condensation du débit 19 de fluide intermédiaire dans le deuxième échangeur de chaleur E2 est plus élevée, de préférence d'au moins 2 bars, que la plus haute des pressions de vaporisation du fluide intermédiaire dans le premier échangeur de chaleur E1.

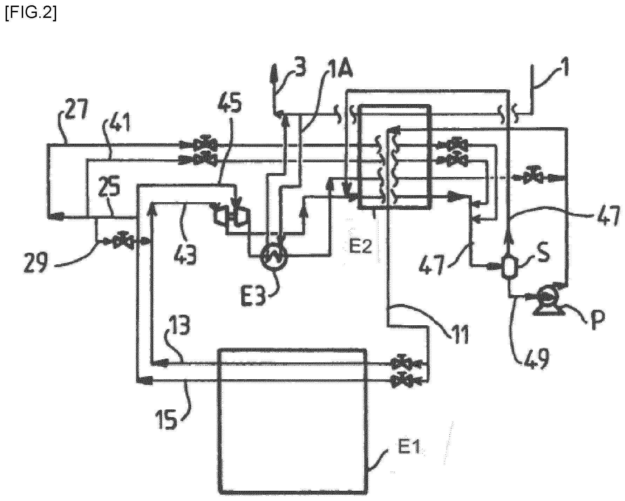

[FIG.2] représente un procédé de condensation de CO2 par échange de chaleur avec un liquide riche en méthane, par exemple du LNG, utilisant un cycle dont le fluide C2 est 100% éthylène. Le détail du liquéfacteur de CO2 n'est pas donné mais un procédé identique ou similaire à celui de la [FIG.1] peut être utilisé pour la liquéfaction.

Ici le fluide C2 se vaporise à deux pressions différentes dans l'échangeur E2 pour condenser le gaz riche en dioxyde de carbone. Le gaz 15 pris au bout chaud de l'échangeur E1 est divisé en deux. Une partie 45 est comprimé dans le compresseur, refroidi dans un échangeur de chaleur E3 et ensuite condensé dans l'échangeur de chaleur E2 contre le LNG. Le reste 25 du gaz 15 est divisé en trois, une partie 29 étant mélangée au gaz 13 pour former un gaz 43 qui est détendu dans la turbine entraînant le compresseur et ensuite est envoyé à l'échangeur E2 pour se condenser complètement formant le débit liquide 47 envoyé au ballon S.

Une autre partie 27 du gaz 25 est détendue puis envoyé à l'échangeur de chaleur E2 où elle est condensée et sousrefroidis, puis mélangée avec le liquide sousrefroidi 47. Une autre partie 41 du gaz 25 est détendue puis envoyée à l'échangeur de chaleur E2 où elle est condensée et sousrefroidie puis mélangée avec le liquide 47.

Ainsi nous voyons que le fluide C2, ici l'éthylène, se condense à quatre pressions différentes dans l'échangeur E2.

L'échangeur E2 peut être un échangeur à plaques et à ailettes, par exemple en aluminium brasé puisqu'il y a un refroidisseur en aval de la compression du débit 45. La turbine est alimentée par le débit de fluide C2 ici éthylène à la pression P2. L'échangeur E3 est refroidi au moyen d'un débit 1A de LNG vaporisé pris à la sortie chaude de l'échangeur E2.

La pression de condensation du débit 45 de fluide intermédiaire dans le deuxième échangeur de chaleur est plus élevée, de préférence d'au moins 2 bars, que la plus haute des pressions de vaporisation du fluide intermédiaire dans le premier échangeur de chaleur.

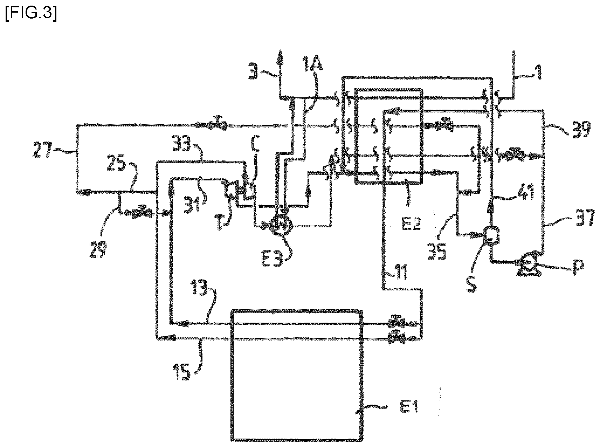

[FIG.3] représente un procédé de condensation de CO2 par échange de chaleur avec du LNG, utilisant un cycle dont le fluide C2 est 93,5% mol éthane et 6,5% mol méthane. Le détail du liquéfacteur de CO2 n'est pas donné mais un procédé identique ou similaire à celui de la [FIG.1] peut être utilisé pour la liquéfaction.

Ici le fluide C2 se vaporise à deux pressions différentes dans l'échangeur E1 pour condenser le gaz riche en dioxyde de carbone. Le gaz 15 pris au bout chaud de l'échangeur E1 est divisé en deux. Une partie 33 est comprimée dans le compresseur C, refroidie dans un échangeur de chaleur E3 et ensuite condensé dans l'échangeur de chaleur E2 contre le LNG. Le reste 25 du gaz 15 est divisé en deux, une partie 29 étant mélangée au gaz 13 pour former un gaz 43 qui est détendu dans la turbine T entraînant le compresseur C et ensuite est envoyé à l'échangeur E2 pour se condenser complètement formant le débit liquide 35 envoyé au ballon S.

L'autre partie 27 du gaz 25 est détendue dans une vanne puis envoyée à l'échangeur de chaleur E2 où elle est condensée, puis elle est mélangée avec le débit sousrefroidi 35 en amont du ballon S.

L'échangeur E3 est refroidi au moyen d'un débit 1A de LNG vaporisé pris à la sortie chaude de l'échangeur E2.

L'échangeur E2 peut être un échangeur à plaques et à ailettes, par exemple en aluminium brasé puisqu'il y a un refroidisseur E3 en aval de la compression du débit 33. La turbine est alimentée par le débit de fluide C2 à la pression P2.

La pression de condensation du débit 33 de fluide intermédiaire dans le deuxième échangeur de chaleur est plus élevée, de préférence d'au moins 2 bars, que la plus haute des pressions de vaporisation du fluide intermédiaire dans le premier échangeur de chaleur.

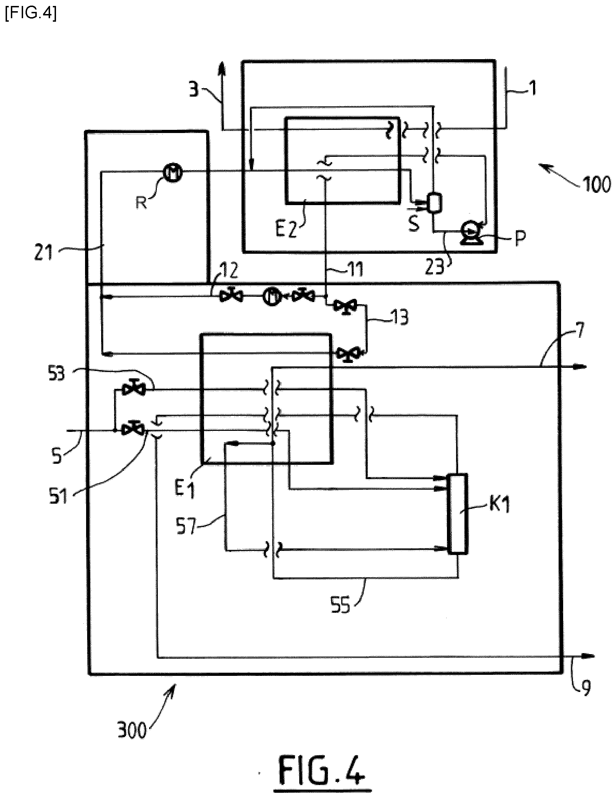

[FIG.4] représente un procédé de condensation de CO2 par échange de chaleur avec un liquide riche en méthane, par exemple du LNG, utilisant un cycle dont le fluide est 93% mol d'éthylène et 7% mol méthane avec un seul débit de fluide se condensant dans l'échangeur E2 Un débit de gaz naturel liquéfié (LNG) 1 est envoyé au bout froid d'un échangeur de chaleur E2 qui peut être un échangeur à plaques et à ailettes ou un échangeur à circuit imprimé. Le gaz naturel liquéfié se vaporise et se réchauffe dans l'échangeur E2 pour produire du gaz naturel 3 sortant du bout chaud de préférence à une température au-dessus de 0°C, par exemple la température ambiante.

Dans l'échangeur de chaleur E2, un débit C2, 21 est refroidi. Le débit 21 traverse l'échangeur de chaleur E1 du bout chaud au bout froid en se condensant complètement et en se sousrefroidissant. Le débit sousrefroidi est séparé dans un ballon S. Le gaz 25 du ballon S rejoint le débit 21 à l'entrée de l'échangeur E2. Le liquide 23 du ballon S est pressurisé par une pompe P. Le débit pompé 11 est désousrefroidi donc chauffé dans l'échangeur de chaleur E2 jusqu'à une température intermédiaire de celui-ci.

Le débit 11 est envoyé au liquéfacteur de CO2 soit dans une conduite isolée soit en parcourant une boîte froide isolée commune à l'échangeur E2 et au liquéfacteur de CO2. Le débit 11 devient le débit 13 et est réchauffé dans un échangeur de chaleur E1 en passant du bout froid vers le bout chaud. Après réchauffage, le débit 13 est réchauffé encore, par exemple jusqu'à 60°C, et envoyé à la pression de sortie du réchauffeur R à l'échangeur E2. Le débit entre dans l'échangeur E2.

Pour le démarrage un débit 12 court-circuite l'échangeur E1 pour permettre au fluide intermédiaire d'être réchauffé par un réchauffeur.

Le débit 5 riche en dioxyde de carbone à entre 10-16 bara est divisé en deux parties 51, 53 Le débit 53 parcourt entièrement l'échangeur E1 et est envoyé comme reflux en tête d'une colonne de distillation K1, s'étant condensé dans l'échangeur E1. L'autre partie 51 se refroidit dans l'échangeur E1 à la même pression que la partie 53 mais sort de l'échangeur E1 à une température intermédiaire entre celles du bout chaud et du bout froid. La partie 51 est ensuite envoyée à la colonne K1.

Le rebouillage de la colonne K1 est fourni en prenant une partie 57 du liquide de cuve 55 de la colonne K1 enrichi en dioxyde de carbone. Le liquide de cuve 55 est envoyée à un niveau intermédiaire de l'échangeur E21 plus chaude que le point de sortie du débit 51. La partie 57 est vaporisée et réchauffée et renvoyée en cuve de la colonne K1 comme gaz. Le reste 7 du liquide 55 est sousrefroidi dans l'échangeur de chaleur E1 par échange de chaleur avec le fluide intermédiaire 11 et forme le dioxyde de carbone liquide qui est le produit du procédé. Le gaz de tête 9 de la colonne K1 se réchauffe dans l'échangeur E1 du bout froid jusqu'au bout chaud et sort du système. Ce gaz 9 est enrichi en impuretés légères telle que l'azote, l'hydrogène, le monoxyde de carbone...

La pression de condensation du débit 19 de fluide intermédiaire dans le deuxième échangeur de chaleur ne diffère de la plus haute des pressions de vaporisation du fluide intermédiaire dans le premier échangeur de chaleur que par les pertes de charge. Le cycle de fluide intermédiaire ne comprend ni compression (à part la pressurisation de la pompe) ni détente dans une turbine. La pompe P sert uniquement à compenser les pertes de charge.

Les [FIG. 1], [FIG. 2], [FIG. 3] et [FIG.4] respectivement peuvent comprendre une conduite pour amener du gaz produit dans le ballon S en amont de l'échangeur E2. Ce gaz résulte des entrées de chaleur dans le ballon S, qui vaporisent une petite partie du liquide qu'il contient. Le gaz formé 25 est envoyé du ballon S et rejoint le gaz 21.

## Revendications

1. Procédé de récupération de frigories d'un fluide riche en méthane, par exemple du gaz naturel liquéfié, pour le refroidissement et éventuellement la liquéfaction, voire la séparation d'un débit riche en dioxyde de carbone (5) dans lequel :
i.on refroidit et éventuellement on condense au moins partiellement le débit riche en dioxyde de carbone dans un premier échangeur de chaleur (E1) à une pression supérieure à 5 bar abs, voire supérieure à 13 bar abs ;
ii.on fournit du froid pour l'étape i) par la vaporisation d'un fluide intermédiaire contenant au moins 80% mol d'éthane ou d'éthylène à au moins un niveau de pression, de préférence à un seul niveau de pression ;
iii.on condense au moins une partie du fluide intermédiaire vaporisé dans l'étape ii) dans un deuxième échangeur de chaleur (E2) à au moins une pression en au moins un flux, de préférence à une seule pression en un seul flux, par échange de chaleur avec le fluide riche en méthane (1) pour former au moins un flux de fluide intermédiaire condensé ;
iv.on pressurise l'au moins un flux de fluide intermédiaire condensé au moyen d'une pompe (P) **caractérisé en ce que**
v.on réchauffe l'au moins un flux (37) pressurisé par la pompe dans le deuxième échangeur de chaleur jusqu'à une température intermédiaire de celui-ci, la température intermédiaire étant une température supérieure à celle d'un bout froid du deuxième échangeur de chaleur et inférieure à celle du bout chaud du deuxième échangeur de chaleur et on l'envoie au premier échangeur de chaleur pour se vaporiser selon l'étape ii).

2. Procédé selon la revendication 1 dans lequel une partie du fluide intermédiaire se condense à une première pression dans le deuxième échangeur (E2) et au moins une autre partie du fluide intermédiaire se condense à au moins une pression inférieure à la première pression dans le deuxième échangeur.

3. Procédé selon la revendication 2 dans lequel on pressurise jusqu'à la première pression dans la pompe (P) l'au moins une autre partie du fluide intermédiaire (35) condensée à l'au moins une pression inférieure à la première pression.

4. Procédé selon la revendication 3 dans lequel l'au moins une partie du fluide intermédiaire réchauffée selon l'étape iv) comprend la partie du fluide intermédiaire condensé à la première pression et au moins une partie du fluide intermédiaire (37) pressurisée par la pompe (P).

5. Procédé selon une des revendications précédentes dans lequel au moins une pression de condensation du fluide intermédiaire dans le deuxième échangeur de chaleur (E2) est plus élevée, de préférence d'au moins 2 bars, que la pression de vaporisation du fluide intermédiaire dans le premier échangeur de chaleur ou, quand il y a plusieurs pressions de vaporisation de fluides intermédiaires, que la plus haute des pressions de vaporisation du fluide intermédiaire dans le premier échangeur de chaleur.

6. Procédé selon la revendication 5 dans lequel la compression de la partie (33) du fluide intermédiaire vaporisé qui est condensé à une pression plus haute que la pression de vaporisation du fluide intermédiaire dans le premier échangeur de chaleur (E1) ou, quand il y a plusieurs pressions de vaporisation de fluides intermédiaires, que la plus haute des pressions de vaporisation, est effectuée par un compresseur (C) entraîné par une turbine (T) qui détend une autre partie (31) du fluide intermédiaire vaporisé.

7. Procédé selon une des revendications précédentes 1 à 5 dans lequel le cycle de fluide intermédiaire ne comprend pas de compresseur ou ne comprend pas de compresseur entraîné par un moteur.

8. Procédé selon une des revendications précédentes dans lequel les pressions de vaporisation du fluide intermédiaire dans le premier échangeur de chaleur (E1) sont entre 3 bara et 25 bara, de préférence entre 4 bara et 21 bara, et/ou les pressions de condensation du fluide intermédiaire dans le deuxième échangeur de chaleur (E2) sont entre 1.05 bara et 50 bara, de préférence entre 1.3 bara et 45 bara.

9. Procédé selon une des revendications précédentes dans lequel le fluide intermédiaire (11) contient plus que 85%vol d'éthane et de préférence plus que 90%vol d'éthane.

10. Procédé selon une des revendications précédentes 1 à 8 dans lequel le fluide intermédiaire (11) contient plus que 85%vol d'éthylène et de préférence plus que 90%vol d'éthylène

11. Procédé selon une des revendications précédentes dans lequel le rapport entre l'au moins un débit molaire de fluide intermédiaire et le débit molaire du débit riche en dioxyde de carbone envoyés au premier échanger de chaleur (E1) est entre 1.0 et 1.5, de préférence entre 1 et 1.4.

12. Procédé selon une des revendications précédentes dans lequel le rapport entre l'au moins un débit molaire de fluide intermédiaire et le débit molaire de gaz riche en méthane (1), par exemple du LNG, envoyés au deuxième échanger de chaleur est entre 0.7 et 1.0, de préférence 0.75 et 0.95.

13. Procédé selon une des revendications précédentes dans lequel le gaz riche en CO2 liquéfié est produit à une température égale ou inférieure à - 40°C et de préférence égale ou inférieure à - 50°C.

14. Procédé selon une des revendications précédentes dans lequel le débit riche en dioxyde de carbone (5) à l'entrée du premier échangeur (E1) contient plus que 30% vol de CO2, de préférence plus que 35% vol CO2.

15. Procédé selon la revendication 14 dans lequel le débit riche en dioxyde de carbone à l'entrée du premier échangeur (E1) contient plus que 90% vol de CO2, de préférence plus que 95% vol CO2.

16. Procédé selon une des revendications précédentes dans lequel au moins une partie du gaz riche en méthane chauffé ou vaporisé dans le deuxième échangeur de chaleur (E2) est envoyée comme carburant ou comme réactant à une unité de reformage de méthane à la vapeur, une unité de reformage auto thermique ou une unité d'oxydation partielle et le débit riche en CO2 (5) est produit par cette unité ou dérivé d'un produit de cette unité.

17. Procédé selon une des revendications précédentes dans lequel un liquide riche en CO2 (55) produit par la liquéfaction ou la séparation par distillation ou condensation partielle du débit riche en dioxyde de carbone est sousrefroidi dans le premier échangeur (E1) par échange de chaleur avec l'au moins une partie du fluide intermédiaire (13) réchauffé dans le deuxième échangeur de chaleur jusqu'à la température intermédiaire.

18. Procédé selon une des revendications précédentes dans lequel le débit riche en CO2 (55) se sépare dans au moins une colonne de distillation (K1).

19. Procédé selon la revendication 18 dans lequel une partie (57) d'un liquide riche en CO2 pris dans la cuve de l'au moins une colonne de distillation (K1) est vaporisée dans le premier échangeur de chaleur à une température supérieure à la température intermédiaire et renvoyée en cuve de la colonne de distillation.

20. Procédé selon une des revendications précédentes dans lequel une partie (17) du fluide intermédiaire réchauffé dans le premier échangeur (E1) est détendue dans une turbine (T) pour générer de l'électricité.

21. Appareil de récupération de frigories d'un fluide riche en méthane (1), par exemple du gaz naturel liquéfié, pour le refroidissement et éventuellement la liquéfaction, voire la séparation d'un débit riche en dioxyde de carbone (5) comprenant un premier échangeur de chaleur (E1), un deuxième échangeur de chaleur (E2), des moyens pour envoyer se refroidir et éventuellement se condenser au moins partiellement le débit riche en dioxyde de carbone dans un premier échangeur de chaleur (E1), un cycle fermé de fluide intermédiaire (11, 13, 15) comprenant des moyens pour envoyer le fluide intermédiaire contenant au moins 80% mol d'éthane ou d'éthylène se vaporiser dans le premier échangeur à au moins un niveau de pression, de préférence à un seul niveau de pression, des moyens pour envoyer le fluide vaporisé se condenser dans le deuxième échangeur de chaleur (E2) à au moins une pression en au moins un flux, de préférence à une seule pression en un seul flux, par échange de chaleur avec le fluide riche en méthane (1) pour former au moins un flux de fluide intermédiaire condensé, une pompe (P) pour pressuriser l'au moins un flux de fluide intermédiaire condensé, **caractérisé en ce qu'**il comprend des moyens pour envoyer le flux de la pompe au deuxième échangeur de chaleur pour se réchauffer jusqu'à une température intermédiaire de celui-ci, la température intermédiaire étant une température supérieure à celle d'un bout froid du deuxième échangeur de chaleur et inférieure à celle du bout chaud du deuxième échangeur de chaleur et des moyens pour extraire le flux réchauffé (11) du deuxième échangeur de chaleur à la température intermédiaire étant reliés aux moyens pour envoyer le fluide intermédiaire contenant au moins 80% mol d'éthane ou d'éthylène se vaporiser dans le premier échangeur.

## Patentansprüche

1. Verfahren zur Rückgewinnung von Kälte aus einer methanreichen Flüssigkeit, z. B. verflüssigtem Erdgas, zur Kühlung und möglicherweise Verflüssigung oder sogar zur Trennung eines kohlendioxidreichen Flusses (5), bei dem
i. der kohlendioxidreiche Durchfluss wird gekühlt und gegebenenfalls zumindest teilweise in einem ersten Wärmetauscher (E1) auf einen Druck größer als 5 bar abs oder sogar größer als 13 bar abs kondensiert;
ii. Die Kühlung für Schritt i erfolgt durch Verdampfen einer Zwischenflüssigkeit, die mindestens 80 mol % Ethan oder Ethylen enthält, auf mindestens einer Druckstufe, vorzugsweise nur bei einer Druckstufe;
III. Zumindest ein Teil der in Schritt II) verdampften Zwischenflüssigkeit wird in einem zweiten Wärmetauscher (E2) mit mindestens einem Druck zu mindestens einem Durchfluss kondensiert, vorzugsweise mit einem einzigen Druck zu einem Durchfluss, Durch Wärmeaustausch mit der methanreichen Flüssigkeit (1), um mindestens einen kondensierten Zwischenfluidstrom zu bilden;
IV. Der mindestens ein kondensierter Zwischenfluidstrom wird mittels einer Pumpe (P), **dadurch gekennzeichnet, daß**, unter Druck gesetzt
v. der mindestens eine Pumpe unter Druck stehende Strom (37) im zweiten Wärmetauscher wird auf eine Zwischentemperatur davon erhitzt, Die Zwischentemperatur ist eine Temperatur, die höher ist als die eines kalten Endes des zweiten Wärmetauschers und niedriger als die des heißen Endes des zweiten Wärmetauschers und wird zum ersten Wärmetauscher geleitet, um gemäß Schritt (II) zu verdampfen.

2. Verfahren nach Anspruch 1, wobei ein Teil der Zwischenflüssigkeit bei einem ersten Druck im zweiten Wärmetauscher (E2) kondensiert und mindestens ein anderer Teil der Zwischenflüssigkeit mindestens bei einem Druck unter dem ersten Druck im zweiten Wärmetauscher kondensiert.

3. Verfahren nach Anspruch 2, wobei der mindestens ein weiterer Teil der Zwischenflüssigkeit (35), der zu dem mindestens einen Druck unter dem ersten Druck kondensiert ist, auf den ersten Druck in der Pumpe (P) unter Druck gesetzt wird.

4. Verfahren nach Anspruch 3, wobei der mindestens ein Teil der Zwischenflüssigkeit, die gemäß Schritt IV) erhitzt wird, den bei dem ersten Druck kondensierten Teil der Zwischenflüssigkeit und mindestens einen Teil der Zwischenflüssigkeit (37) umfasst, der von der Pumpe (P) unter Druck steht.

5. Verfahren nach einem der vorangehenden Ansprüche, bei dem mindestens ein Kondensationsdruck des Zwischenmediums im zweiten Wärmetauscher (E2) höher ist, vorzugsweise um mindestens 2 bar, als der Verdampfungsdruck des Zwischenmediums im ersten Wärmetauscher, oder Wenn mehrere Zwischendrucke für die Verdampfung von Flüssigkeiten vorhanden sind, als der höchste der Zwischendrücke für die Verdampfung von Flüssigkeiten im ersten Wärmetauscher.

6. Verfahren nach Anspruch 5, bei dem der Teil (33) des verdampften Zwischenöls, der zu einem Druck verdichtet wird, der höher als der Verdampfungsdruck des Zwischenöls im ersten Wärmetauscher (E1) ist, komprimiert wird oder Wenn mehrere Zwischendrücke der Verdampfung vorhanden sind, wird der höchste der Verdampfungsdrücke von einem Kompressor (C) ausgelöst, der von einer Turbine (T) angetrieben wird, die einen weiteren Teil (31) der verdampften Zwischenflüssigkeit ausdehnt.

7. Verfahren nach einem der vorhergehenden Ansprüche 1 bis 5, wobei der Zwischenfluidzyklus keinen Kompressor oder keinen motorbetriebenen Kompressor umfasst.

8. Verfahren nach einem der vorangehenden Ansprüche, bei dem die Verdampfungsdrücke des Zwischenöls im ersten Wärmetauscher (E1) zwischen 3 bara und 25 bara, vorzugsweise zwischen 4 bara und 21 bara, liegen, Und/oder die Kondensationsdrücke der Zwischenflüssigkeit im zweiten Wärmetauscher (E2) liegen zwischen 1,05 bara und 50 bara, vorzugsweise zwischen 1,3 bara und 45 bara.

9. Verfahren nach einem der vorangehenden Ansprüche, bei dem die Zwischenflüssigkeit (11) mehr als 85 Volumenprozent Ethan und vorzugsweise mehr als 90 Volumenprozent Ethan enthält.

10. Verfahren nach einem der vorangehenden Ansprüche 1 bis 8, bei dem die Zwischenflüssigkeit (11) mehr als 85 Vol.-% Ethylen, vorzugsweise mehr als 90 Vol.-% Ethylen enthält.

11. Verfahren nach einem der vorangehenden Ansprüche, bei dem das Verhältnis zwischen dem mindestens einen molaren Durchfluss der Zwischenflüssigkeit und dem molaren Durchfluss der kohlendioxidreichen Strömung, die zum ersten Wärmetauscher (E1) geleitet wird, zwischen 1,0 und 1,5, vorzugsweise zwischen 1 und 1,4 liegt.

12. Verfahren nach einem der vorangehenden Ansprüche, bei dem das Verhältnis zwischen der mindestens einen molaren Durchflussrate des Zwischenöls und der molaren Durchflussrate des methanreichen Gases (1), beispielsweise LNG, das an den zweiten Wärmetauscher gesendet wird, zwischen 0,7 und 1,0, vorzugsweise 0,75 und 0,95 liegt.

13. Verfahren nach einem der vorangehenden Ansprüche, bei dem das verflüssigte CO2-reiche Gas bei einer Temperatur kleiner/gleich -40°C und vorzugsweise kleiner/gleich -50°C erzeugt wird

14. Verfahren nach einem der vorangehenden Ansprüche, bei dem der kohlendioxidreiche Fluss (5) am Einlass des ersten Wärmetauschers (E1) mehr als 30% vol CO2, vorzugsweise mehr als 35% vol CO2 enthält.

15. Verfahren nach Anspruch 14, wobei der kohlendioxidreiche Durchfluss am Einlass des ersten Wärmetauschers (E1) mehr als 90 Vol.-% CO2, vorzugsweise mehr als 95 Vol.-% CO2 enthält.

16. Verfahren nach einem der vorangehenden Ansprüche, bei dem mindestens ein Teil des im zweiten Wärmetauscher (E2) erwärmten oder verdampften methanreichen Gases als Brennstoff oder als Reaktant einem Dampfmethanreformer zugeführt wird. Eine automatische thermische Reformierungseinheit oder eine partielle Oxidationseinheit und der CO2-reiche Fluss (5) werden von dieser Einheit erzeugt oder von einem Produkt dieser Einheit abgeleitet.

17. Verfahren nach einem der vorangehenden Ansprüche, bei dem eine durch Verflüssigung oder Abtrennung durch Destillation oder Teilkondensation des kohlendioxidreichen Stroms erzeugte CO2-reiche Flüssigkeit (55) im ersten Wärmetauscher (E1) durch Wärmeaustausch mit dem zumindest Teil des Wassers unterkühlt wird Im zweiten Wärmetauscher auf Zwischentemperatur erwärmte Zwischenflüssigkeit (13).

18. Verfahren nach einem der vorangehenden Ansprüche, bei dem der CO2-reiche Strom (55) in mindestens einer Destillationskolonne (K1) getrennt wird.

19. Verfahren nach Anspruch 18, bei dem ein Teil (57) einer CO2-reichen Flüssigkeit, der vom Boden der mindestens einer Destillationskolonne (K1) entnommen wird, im ersten Wärmetauscher bei einer Temperatur oberhalb der Zwischentemperatur verdampft und zum Boden der Säule zurückgeführt wird Destillation.

20. Verfahren nach einem der vorangehenden Ansprüche, bei dem ein Teil (17) des im ersten Wärmetauscher (E1) erwärmten Zwischenöls in einer Turbine (T) zur Stromerzeugung erweitert wird.

21. Apparate zum Rückgewinnen von Kälte aus einer methanreichen Flüssigkeit (1), z. B. Flüssigerdgas, zum Kühlen und gegebenenfalls Verflüssigen oder sogar zur Trennung eines kohlendioxidreichen Ströms (5), der einen ersten Wärmetauscher (E1) und einen zweiten Wärmetauscher (E2) umfasst, Einrichtung zur Kühlung und gegebenenfalls zumindest teilweise Kondensation des kohlendioxidreichen Durchflusses in einem ersten Wärmetauscher (E1), einem geschlossenen Zwischenfluidkreislauf (11, 13, 15) Mit einer Vorrichtung, mit der die Zwischenflüssigkeit, die mindestens 80 mol% Ethan oder Ethylen enthält, in den ersten Wärmetauscher bei mindestens einem Druckniveau, vorzugsweise nur einem Druckniveau, verdampft wird, Einrichtung zum Ableiten des verdampften Fluids, um im zweiten Wärmetauscher (E2) mindestens einen Druck in mindestens einer Strömung, vorzugsweise bei einem einzigen Druck in einer Strömung, zu kondensieren, Durch den Wärmeaustausch mit der methanreichen Flüssigkeit (1), um mindestens einen kondensierten Zwischenfluidstrom zu bilden, eine Pumpe (P), um den mindestens einen kondensierten Zwischenfluidstrom unter Druck zu setzen, **Dadurch gekennzeichnet, dass** sie eine Einrichtung umfasst, mit der der Durchfluss von der Pumpe zum zweiten Wärmetauscher geleitet wird, um ihn auf eine Zwischentemperatur davon zu erwärmen, Die Zwischentemperatur ist eine Temperatur, die höher ist als die eines kalten Endes des zweiten Wärmetauschers und niedriger als die des heißen Endes des zweiten Wärmetauschers und eine Einrichtung zum Absaugen des erwärmten Stroms (11) des zweiten Wärmetauschers bei der mit dem verbundenen Zwischentemperatur Mittel, um die Zwischenflüssigkeit, die mindestens 80 mol% Ethan oder Ethylen enthält, in den ersten Wärmetauscher zu verdampfen.

## Claims

1. Process for the recovery of cold from a methane-rich fluid, for example liquefied natural gas, for the cooling and optionally the liquefaction, indeed even the separation, of a flow rich in carbon dioxide (5), in which:
i. the flow rich in carbon dioxide is cooled and optionally condensed, at least partially, in a first heat exchanger (E1) at a pressure of greater than 5 bar abs, indeed even of greater than 13 bar abs;
ii. cold is provided for stage i) by the evaporation of an intermediate fluid containing at least 80 mol% of ethane or of ethylene at at least one pressure level, preferably at a single pressure level;
iii. at least a part of the intermediate fluid evaporated in stage ii) is condensed in a second heat exchanger (E2) at at least one pressure into at least one flow, preferably at a single pressure into a single flow, by exchange of heat with the methane-rich fluid (1) to form at least one condensed intermediate fluid flow;
iv. the at least one condensed intermediate fluid flow is pressurized by means of a pump (P), **characterized in that**
v. the at least one flow (37) pressurized by the pump is heated in the second heat exchanger up to an intermediate temperature of the exchanger, the intermediate temperature being a temperature greater than that of a cold end of the second heat exchanger and lower than that of the hot end of the second heat exchanger, and is sent to the first heat exchanger in order to be evaporated according to stage ii).

2. Process according to Claim 1, in which a part of the intermediate fluid is condensed at a first pressure in the second exchanger (E2) and at least another part of the intermediate fluid is condensed at at least a pressure lower than the first pressure in the second exchanger.

3. Process according to Claim 2, in which the at least another part of the intermediate fluid (35) condensed at the at least a pressure lower than the first pressure is pressurized up to the first pressure in the pump (P).

4. Process according to Claim 3, in which the at least a part of the intermediate fluid heated according to stage iv) comprises the part of the intermediate fluid condensed at the first pressure and at least a part of the intermediate fluid (37) pressurized by the pump (P).

5. Process according to one of the preceding claims, in which at least one condensation pressure of the intermediate fluid in the second heat exchanger (E2) is higher, preferably by at least 2 bar, than the evaporation pressure of the intermediate fluid in the first heat exchanger or, when there are several evaporation pressures of intermediate fluids, than the highest of the evaporation pressures of the intermediate fluid in the first heat exchanger.

6. Process according to Claim 5, in which the compression of the part (33) of the evaporated intermediate fluid which is condensed at a higher pressure than the evaporation pressure of the intermediate fluid in the first heat exchanger (E1) or, when there are several evaporation pressures of intermediate fluids, than the highest of the evaporation pressures is carried out by a compressor (C) driven by a turbine (T) which reduces in pressure another part (31) of the evaporated intermediate fluid.

7. Process according to one of the preceding Claims 1 to 5, in which the intermediate fluid cycle does not comprise a compressor or does not comprise a compressor driven by a motor.

8. Process according to one of the preceding claims, in which the evaporation pressures of the intermediate fluid in the first heat exchanger (E1) are between 3 bara and 25 bara, preferably between 4 bara and 21 bara, and/or the condensation pressures of the intermediate fluid in the second heat exchanger (E2) are between 1.05 bara and 50 bara, preferably between 1.3 bara and 45 bara.

9. Process according to one of the preceding claims, in which the intermediate fluid (11) contains more than 85 vol% of ethane and preferably more than 90 vol% of ethane.

10. Process according to one of the preceding Claims 1 to 8, in which the intermediate fluid (11) contains more than 85 vol% of ethylene and preferably more than 90 vol% of ethylene.

11. Process according to one of the preceding claims, in which the ratio of the at least one molar flow of intermediate fluid to the molar flow of the flow rich in carbon dioxide which are sent to the first heat exchanger (E1) is between 1.0 and 1.5, preferably between 1 and 1.4.

12. Process according to one of the preceding claims, in which the ratio of the at least one molar flow of intermediate fluid to the molar flow of methane-rich gas (1), for example LNG, which are sent to the second heat exchanger is between 0.7 and 1.0, preferably 0.75 and 0.95.

13. Process according to one of the preceding claims, in which the liquefied CO₂-rich gas is produced at a temperature equal to or less than -40°C and preferably equal to or less than -50°C.

14. Process according to one of the preceding claims, in which the flow rich in carbon dioxide (5) at the inlet of the first exchanger (E1) contains more than 30 vol% of CO₂, preferably more than 35 vol% of CO₂.

15. Process according to Claim 14, in which the flow rich in carbon dioxide at the inlet of the first exchanger (E1) contains more than 90 vol% of CO₂, preferably more than 95 vol% of CO₂.

16. Process according to one of the preceding claims, in which at least a part of the methane-rich gas heated or evaporated in the second heat exchanger (E2) is sent, as fuel or as reactant, to a steam methane reforming unit, an autothermal reforming unit or a partial oxidation unit and the CO₂-rich flow (5) is produced by this unit or derived from a product from this unit.

17. Process according to one of the preceding claims, in which a CO₂-rich liquid (55) produced by the liquefaction or the separation by partial condensation or distillation of the flow rich in carbon dioxide is subcooled in the first exchanger (E1) by exchange of heat with the at least a part of the intermediate fluid (13) heated in the second heat exchanger up to the intermediate temperature.

18. Process according to one of the preceding claims, in which the CO₂-rich flow (55) is separated in at least one distillation column (K1).

19. Process according to Claim 18, in which a part (57) of a CO₂-rich liquid taken from the bottom of the at least one distillation column (K1) is evaporated in the first heat exchanger at a temperature greater than the intermediate temperature and returned to the bottom of the distillation column.

20. Process according to one of the preceding claims, in which a part (17) of the intermediate fluid heated in the first exchanger (E1) is reduced in pressure in a turbine (T) in order to generate electricity.

21. Apparatus for the recovery of cold from a methane-rich fluid (1), for example liquefied natural gas, for the cooling and optionally the liquefaction, indeed even the separation, of a flow rich in carbon dioxide (5) comprising a first heat exchanger (E1), a second heat exchanger (E2), means for sending, to be cooled and optionally to be condensed, at least partially, the flow rich in carbon dioxide into a first heat exchanger (E1), a closed intermediate fluid cycle (11, 13, 15) comprising means for sending the intermediate fluid, containing at least 80 mol% of ethane or of ethylene, to be evaporated in the first exchanger at at least one pressure level, preferably at a single pressure level, means for sending the evaporated fluid to be condensed in the second heat exchanger (E2) at at least one pressure into at least one flow, preferably at a single pressure into a single flow, by exchange of heat with the methane-rich fluid (1), to form at least one condensed intermediate fluid flow, a pump (P) for pressurizing the at least one condensed intermediate fluid flow, **characterized in that** it comprises means for sending the flow from the pump to the second heat exchanger in order to be heated up to an intermediate temperature of the exchanger, the intermediate temperature being a temperature greater than that of a cold end of the second heat exchanger and lower than that of the hot end of the second heat exchanger, and means for extracting the heated flow (11) from the second heat exchanger at the intermediate temperature being connected to the means for sending the intermediate fluid containing at least 80 mol% of ethane or of ethylene to be evaporated into the first exchanger.
